# EUROPEAN PATENT APPLICATION

(11) **EP 3 608 638 A1**
(43) Date of publication of application: **12.02.2020**
(21) Application number: 18780998.3
(22) Date of filing: 04.04.2018
(51) Int. Cl.: G01D 11/00, B65G 25/08

(54) **VEHICLE INSPECTION SYSTEM**

(30) Priority: 07.04.2017 CN 201710223124
(71) Applicant: Tsinghua University, Haidian District Beijing 100084 (CN); Nuctech Company Limited, Beijing 100084 (CN)
(72) Inventor: LI, Ying, Beijing 100084 (CN); LI, Jianmin, Beijing 100084 (CN); CAO, Jinguo, Beijing 100084 (CN); LI, Yulan, Beijing 100084 (CN); YU, Hao, Beijing 100084 (CN); LI, Yuanjing, Beijing 100084 (CN); MENG, Hui, Beijing 100084 (CN); CHEN, Zhiqiang, Beijing 100084 (CN); ZHANG, Li, Beijing 100084 (CN)
(74) Representative: Held, Stephan
(86) International application number: PCT/CN2018/081849
(87) International publication number: WO 2018/184556

(57) **Abstract**

The disclosure provides a vehicle inspection system which comprises a scanning device and a vehicle transmission device extending through a scanning area of the scanning device. The vehicle transmission device is configured to drive a vehicle being inspected through the scanning area, and comprises an initial driving section located upstream of the scanning area along the moving direction of the vehicle being inspected and a self-moving section arranged downstream of the initial driving section; the initial driving section is configured to drive the vehicle being inspected to move towards the scanning device and enable the vehicle being inspected to have an initial speed upon termination of driving; the self-moving section is configured to allow the vehicle being inspected to move on by itself after termination of driving so that the vehicle being inspected will entirely pass through the scanning area. The vehicle inspection system has the advantages of simple structure and low cost.

## Description

### Related Application(s)

The present application claims priority to China Patent Application No. 201710223124.X filed on April 7, 2017 for a "vehicle inspection system", the disclosure of which is incorporated by reference herein in its entirety.

### Technical Field

The disclosure relates to the field of image inspection equipment, in particular to a vehicle inspection system.

### Background

In the vehicle inspection system, vehicles are mainly inspected by a drive-through mode and a dragging mode. Under the drive-through mode, a driver does not need to get out of a vehicle during the inspection process, but drives the vehicle directly through a scanning area to get both the persons in the vehicle and the vehicle scanned at the same time. This mode has the advantages of high inspection efficiency and simple structure, but is restricted to a certain extent in some countries and regions as the persons in vehicles will be exposed to a certain amount of radiation. Under the dragging mode, the vehicle inspection system is equipped with a special dragging device which will drag a vehicle being inspected from the entrance side of a scanning area to the exit side to complete a scanning process after a driver has parked the vehicle to a required position and the persons on the vehicle have got off. The dragging mode is more widely used because persons in vehicles do not need to be scanned.

A side-view imaging mode and a top-view imaging mode are adopted in the vehicle inspection system for imaging. For the side-view imaging mode, a radiation source and a detector are located on both sides of the vehicle being inspected respectively. For the top-view imaging mode, a radiation source and a detector are provided above and below the vehicle being inspected respectively.

In recent years, the top-view imaging mode achieved greater development because of clear images and less overlaps, but under which the arrangement of the dragging device is easily affected by a detector boom as in a vehicle inspection system with the top-view imaging mode, moving direction of the dragging device is perpendicular to arrangement directions of the detector, and when the dragging device passes through the scanning area along the moving direction, the structure of the dragging device itself will affect the quality of scanned images of the vehicle being inspected.

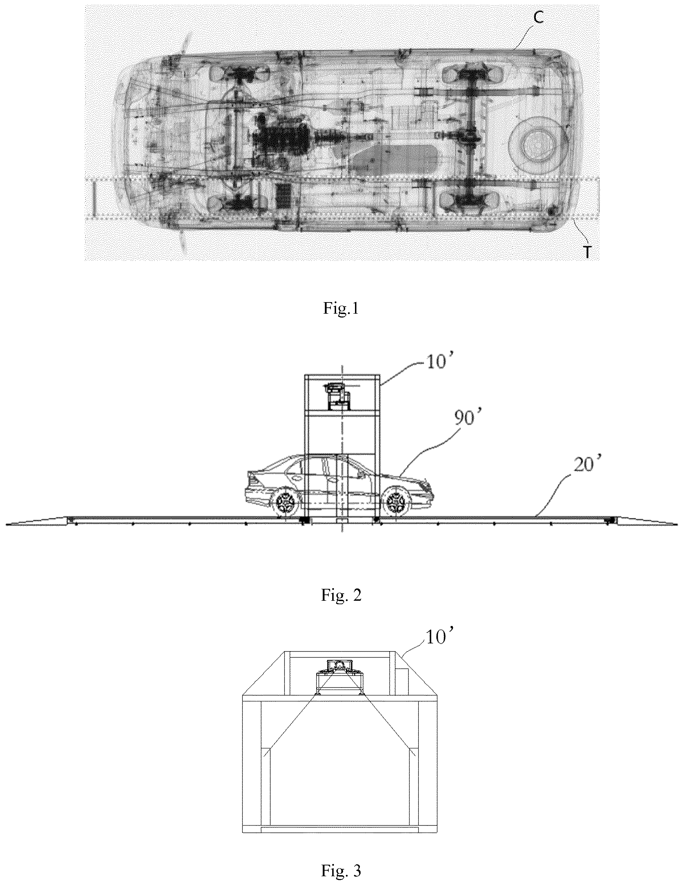

Fig. 1 is a scanned vehicle image generated by a vehicle inspection system using the prior art. As shown in Fig.1, Image T of the dragging device is superimposed with Image C of the vehicle being inspected, which has an adverse impact on the analysis of the items carried in the vehicle being inspected.

A two-section dragging device is adopted in the prior art as the prevailing solution to solve the above problems and keep scanned images unaffected.

As shown in Fig. 2 to Fig. 4, the dragging device 20' comprises a first dragging section A and a second dragging section B which are successively provided along the moving direction of the vehicle being inspected 90' and are respectively arranged on both sides of a scanning device 10' to drag the vehicle being inspected 90' by means of relay transmission. Upon the start of scanning, the first dragging section A pushes rear wheels of the vehicle being inspected 90' forward, with the vehicle head passing through the scanning area and being scanned, and the second dragging section B starts up as soon as front wheels of the vehicle being inspected 90' reaches to the second dragging section B to push the fronts wheels of the vehicle being inspected 90' forward and complete the scanning of the rear half of the vehicle.

The two-section dragging device in the prior art, though, prevents images of dragging devices from being superimposed on images of vehicles being inspected in scanned vehicle image generation, some disadvantages of the prior art are discovered by inventors in the process of realizing the disclosure and are listed as follows: complex structure and high cost of the two-section dragging device; two-section dragging makes it necessary to accurately judge the time when front wheels reach the second dragging section, of which the control process is complex; diversified varieties of vehicles being inspected and great differences in wheel sizes and structures cause the first dragging section and the second dragging section to be unstable during handover, thus affecting image quality.

### Summary

The purpose of the disclosure is to provide a vehicle inspection system, aiming to solve the problem of complex structure and high cost in a vehicle inspection system with a two-section dragging devices.

The disclosure provides a vehicle inspection system which comprises a scanning device and a vehicle transmission device extending through a scanning area of the scanning device. The vehicle transmission device is configured to drive a vehicle being inspected through the scanning area. The vehicle transmission device comprises an initial driving section located upstream of the scanning area along a moving direction of the vehicle being inspected and a self-moving section arranged downstream of the initial driving section. The initial driving section is configured to drive the vehicle being inspected to move towards the scanning device and enable the vehicle being inspected to have an initial speed upon termination of driving; the self-moving section allows the vehicle being inspected to move on by itself after termination of driving so that the vehicle being inspected will entirely pass through the scanning area.

Further, the initial driving section is configured to terminate driving when the vehicle being inspected partially passes through the scanning area.

The initial driving section is configured to drive the vehicle being inspected to move towards the scanning device, wherein the initial driving section terminates driving before the vehicle being inspected entirely passes through the scanning area and meanwhile enables the vehicle being inspected to have an initial speed, and then the vehicle being inspected enters the self-moving section at the effect of the initial speed and moves on the self-moving section to entirely passes through the scanning area.

In some embodiments, the initial driving section is configured to drive the vehicle being inspected by pushing front or rear wheels of the vehicle.

In some embodiments, the initial driving section is a unilateral driving section which drives either left wheels or right wheels of the vehicle being inspected; or the initial driving section is a bilateral driving section which drives both left wheels and right wheels of the vehicle being inspected.

In some embodiments, the driving section comprises a conveying surface carrying the vehicle being inspected, a pushing member provided on the conveying surface for pushing wheels, and a limiting member provided on the conveying surface and located downstream of the pushing member; when the initial driving section drives the vehicle being inspected, wheels on at least one side of the vehicle being inspected are carried by the conveying surface, and at least one wheel of the vehicle being inspected is limited between the pushing member and the limiting member.

In some embodiments, the limiting member comprises a convex boss protruding from the conveying surface.

In some embodiments, the self-moving section comprises a downward inclined section of which one end near the initial driving section inclines downward toward another end away from the initial driving section.

In some embodiments, the one end of the downward inclined section near the initial driving section is 15 cm to 25 cm higher than the another end away from the initial driving section.

In some embodiments, the downward inclined section is 1.4m-2.0m in length.

In some embodiments, the self-moving section comprises a smooth upper surface and the scanning region is arranged above the self-moving section.

In some embodiments, the self-moving section comprises a plurality of parallel transfer rollers distributed at the top of the self-moving section along the moving direction of the vehicle being inspected.

In some embodiments, the vehicle transmission device also comprises a deceleration section arranged downstream of the self-driving section along the moving direction of the vehicle being inspected.

In some embodiments, the deceleration section comprises a horizontal section and at least one deceleration strip arranged on the horizontal section; or the deceleration section comprises an upward inclined section, which inclines upward from one end near the self-moving section toward another end away from the self-moving section; or the deceleration section comprises a friction section laid with granular materials or soft materials.

The vehicle inspection system provided by the disclosure has the advantages of simple structure and low cost in that the vehicle transmission device comprises only one driving section - the initial driving section, not two driving sections, and motors, plate chains, and other driving members required by the driving section are not necessary for the self-moving section. The control process is simpler because only the initial driving section needs to be controlled when controlling the vehicle transmission device. Image quality is no longer affected by an unstable handover as there is no more handover between two driving sections.

Other features of the disclosure and advantages of the features can be understood more clearly from the following detailed description of exemplary embodiments of the disclosure with reference to the accompanying drawings.

### Brief Description of the Drawings

The accompanying drawings, which constitute part of this application, are intended to provide a further understanding of the disclosure. The exemplary embodiments of the disclosure and description thereof serve to explain the disclosure, but do not constitute improper restrictions on the disclosure. In the drawings:
Fig. 1 is a scanned vehicle image generated by a vehicle inspection system using the prior art.
Fig. 2 is a schematic diagram of a vehicle inspection system provided with a two-section vehicle transmission device in the prior art, wherein a vehicle being inspected is shown.
Fig. 3 is a schematic diagram of a scanning device of the vehicle inspection system shown in Fig. 1.
Fig. 4 is a schematic diagram of top view of the vehicle inspection system of Fig. 1.
Fig. 5 is a schematic diagram of a vehicle inspection system in a first embodiment of the disclosure, wherein a vehicle being inspected is shown.
Fig. 6 is a partially enlarged schematic view of Fig. 5.
Fig. 7 is a scanned vehicle image generated by the vehicle inspection system shown in Fig. 5.
Fig. 8 is a schematic diagram of a vehicle inspection system in a second embodiment of the disclosure, wherein a vehicle being inspected is shown.
Fig. 9 is a schematic diagram of a vehicle inspection system in the second embodiment of the disclosure.
Fig. 10 is a schematic diagram of a vehicle inspection system in a third embodiment of the disclosure, wherein a vehicle being inspected is shown.
Fig. 11 is a schematic diagram of top view of a vehicle inspection system in the third embodiment of the disclosure.

### Detailed Description of the Preferred Embodiments

Together with the Figures in the embodiments of the disclosure, the following text will describe clearly and completely the technical solution implemented in the embodiments of the disclosure. Obviously, the embodiments described are merely part of embodiments implemented in the disclosure, not all embodiments. The following description of at least one exemplary embodiment is in fact illustrative only and is in no way intended to limit the disclosure and its application or use. For embodiments of the disclosure, all other embodiments obtained by those of ordinary skill in the art without making creative efforts fall within the scope of protection of the disclosure.

Relative arrangement of components and steps, numerical expressions, and numerical values set forth in these embodiments, unless specifically stated otherwise, should not be explained as a limitation on the present disclosure. It should be understood that the dimensions of the various parts shown in the accompanying drawings are for descriptive purposes and are not necessarily drawn according to the actual scale. Techniques, methods, and apparatus known to those of ordinary skill in the relevant art may not be discussed in detail, but where appropriate, these techniques, methods, and apparatuses should be considered as part of this specification. In all the examples shown and discussed here, any specific value should be interpreted as merely exemplary and not as a limitation. Therefore, other examples of the exemplary embodiments may have different value. It should be noted that similar labels and letters represent similar items in the accompanying drawings below, and therefore, any item already defined in one accompanying drawing does not need to be further discussed in subsequent accompanying drawings.

The use of the terms "first", "second" and similar words when describing the disclosure are merely used to distinguish between different parts and have no special meaning unless otherwise stated, therefore cannot be construed as limiting the scope of protection of the disclosure.

It should be noted that nouns of locality used to describe the disclosure, such as "front, rear, top, bottom, left and right", "transverse, vertical, perpendicular and horizontal" and "top and bottom", usually indicate the orientation or positional relationship shown in the accompanying drawings for the convenience of describing the disclosure and simplifying the description only and, in the absence of a statement to the contrary, do not indicate or imply that the device or element in question must have a particular orientation or be constructed and operated in a particular orientation, and therefore cannot be understood as a limitation on the scope of protection of the disclosure; Terms "inside" and "outside" refer to the inside and outside of the outline of each component.

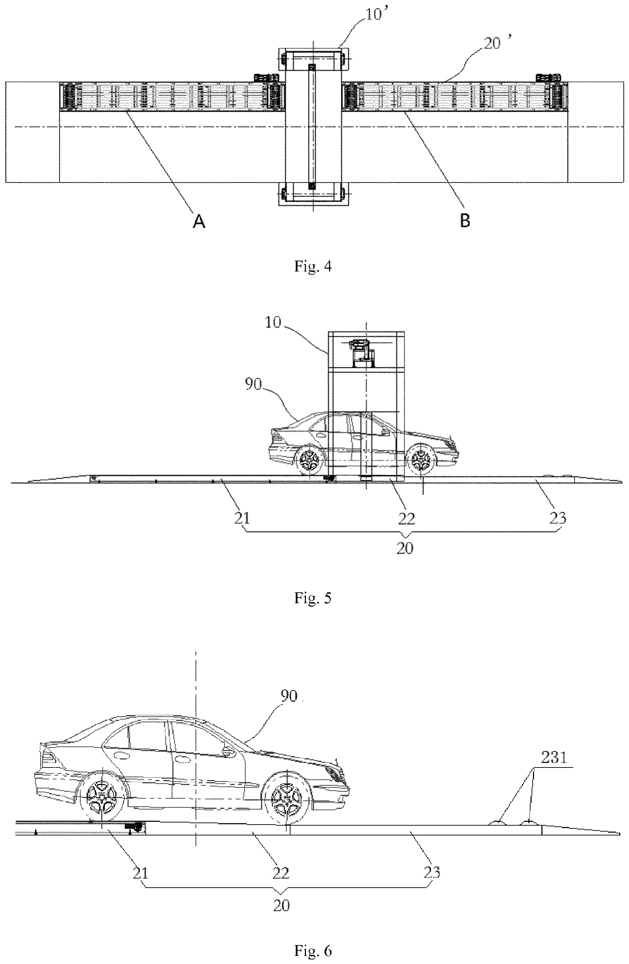

Fig. 5, Fig. 6 and Fig. 8 to Fig. 11 show the structure of the vehicle inspection system disclosed in the disclosure. As shown in Fig. 5, Fig. 6, and Fig. 8 to Fig. 11, the vehicle inspection system disclosed in the disclosure comprises a scanning device 10 and a vehicle transmission device 20. The vehicle transmission device 20 is configured to drive a vehicle being inspected 90 to pass through a scanning area of a scanning device 10. The vehicle transmission device 20 comprises an initial driving section 21 located upstream of the scanning area along a moving direction of the vehicle being inspected 90 and a self-moving section 22 arranged downstream of the initial driving section 21. The initial driving section 21 is configured to drive the vehicle being inspected 90 to move towards the scanning device 10 and enables the vehicle being inspected 90 to have an initial speed upon termination of driving. The self-moving section 22 is configured to allow the vehicle being inspected 90 to move on by itself after termination of driving until the vehicle being inspected 90 entirely passes through the scanning area.

The vehicle inspection system has the advantages of simple structure and low cost while scanned vehicle images are not affected by vehicle transmission devices, in that the vehicle transmission device 20 comprises only one driving section - the initial driving section 21, not two driving sections, and motors, plate chains, and other driving members required by a driving section are not necessary for the self-moving section 22. The control process is simpler because only the initial driving section 21 needs to be controlled when controlling the vehicle transmission device 20, and image quality is no longer affected by an unstable handover as there is no more handover between two driving sections.

Embodiments of the disclosure are described in detail in combination with Fig. 5 to Fig. 11 below.

Fig. 5 and Fig. 6 show the structure of a vehicle inspection system in a first embodiment of the disclosure.

The vehicle inspection system in the first embodiment comprises the scanning device 10 and the vehicle transmission device 20, as shown in Fig. 5 and Fig. 6.

The vehicle transmission device 20 is configured to drive a vehicle being inspected 90 to pass through a scanning area of a scanning device 10. The vehicle transmission device 20 comprises the initial driving section 21, the self-moving section 22 and a deceleration section 23.

The initial driving section 21 is located upstream of the scanning area of the scanning device along a moving direction of the vehicle being inspected 90. The initial driving section 21 is configured to drive the vehicle being inspected 90 to move towards the scanning device 10 and enable the vehicle being inspected 90 to have an initial speed upon termination of driving. This initial speed is the basic condition for the vehicle being inspected 90 to move on its own on the self-driving section 20.

In the first embodiment, the initial driving section 21 terminates driving as soon as part of the vehicle being inspected 90 passes through the scanning area. The purpose of making such arrangement is conductive to making full use of the driving effect of the initial driving section 21, reducing the distance within the scanning area passed by the vehicle being inspected 90 without being driven, and ultimately ensuring that the vehicle being inspected 90 passes through the scanning area entirely.

The initial driving section 21 may adopt various driving forms, for example, the initial driving section 21 may push either front wheels or rear wheels of the vehicle being inspected 90 to drive the vehicle being inspected 90.

Further, the initial driving section 21 may work as a unilateral driving section to drive either left side wheels or right side wheels of the vehicle being inspected; the initial driving section 21 may also work as a bilateral driving section to drive left side wheels and right side wheels of the vehicle being inspected.

In the first embodiment, the unilateral driving section is adopted as the initial driving section 21 to drive rear wheels of a vehicle, which saves costs.

In the first embodiment, the initial driving section 21, a unilateral-driving plate chain conveyor to be specific, comprises a conveying surface which carries the vehicle being inspected 90 and is the same as the plate chain surface of the plate chain conveyor.

The initial driving section 21 also comprises a pushing member disposed on the conveying surface for pushing wheels. The pushing member is a pusher fixed to the plate chain. When the vehicle being inspected 90 is carried on the plate chain, the pusher is arranged behind rear wheels of the vehicle being inspected 90 so that the pusher will push the vehicle being inspected 90 forward along with the forward-moving plate chain.

The self-moving section 22 is arranged downstream of the initial driving section 21, and allows the vehicle being inspected 90 to slide by itself after termination of driving until the vehicle being inspected 90 entirely passes through the scanning area.

In the first embodiment, the self-moving section 22 comprises a downward inclined section, which inclines downward from one end near the initial driving section 21 toward another end away from the initial driving section 21. The vehicle being inspected 90 moves on the downward inclined section under both inertia and gravity, which alleviates the speed reduction caused by friction resistance, helps to ensure continuous forward motion of the vehicle, and enables the rear of the vehicle to slide through the scanning area to complete vehicle scanning.

In some embodiments, the one end of the downward inclined section near the initial driving section 21 may be set to be 15 cm to 25 cm higher than the another end away from the initial driving section 21. Reasonable setting of the height of the downward inclined section is conducive to ensuring that the rear of the vehicle passes through the scanning area.

In some embodiments, the downward inclined section is 1.4m-2.0m in length. Reasonable setting of the length of the downward inclined section is conducive to ensuring that the rear of the vehicle passes through the scanning area.

Overall driving distance on the downward inclined section and gravity on the vehicle being inspected 90 that can be utilized on the downward inclined section may be under control once the height difference between the two ends and the length of the downward inclined section are determined. Reasonable setting of slope, slope change or section number of the downward inclined section is conducive to controlling changes of vehicle speed and preventing vehicle speeds from changing too fast when the vehicle being inspected 90 passes through the scanning area, so as to improve the quality of scanned vehicle images.

In the first embodiment, the one end of the downward inclined section near the initial driving section 21 may be 20 cm higher than the another end away from the initial driving section 21, and the downward inclined section may be 1.8m in length.

In the present, the upper surface of the downward inclined section is a plane and, of course, may be in other forms. Vehicles being inspected Vehicles being inspected

As shown in Fig. 5 and Fig. 6, the deceleration section 23 of the vehicle transmission device is arranged downstream of the self-moving section 22, which is helpful for the vehicle being inspected 90 to stop moving quickly, for the vehicle being inspected 90 to stop in the designated position or area, and for improving the safety of the whole inspection process.

The deceleration section 23 may be in various forms. In the present embodiment, the deceleration section 23 comprises a horizontal section and at least one deceleration strip 231 arranged on the horizontal section. Vehicle transmission device

As shown in Fig.5 and Fig.6, three components of the vehicle transmission device 20, namely the initial driving section 21, the self-moving section 22 and the deceleration section 23, are sequentially connected. The initial driving section 21 is located at the entrance side of the scanning area, the scanning area is above the self-moving section 22, the upper surface of the self-section 22 comprises a smooth surface, and the deceleration section 23 is located at the exit side of the scanning area. The vehicle being inspected 90 runs from the initial driving section 21 to the self-moving section 22, and then to the deceleration section 23, during which all parts of the vehicle being inspected 90 pass through the scanning area to complete the whole vehicle scanning.

Since the scanning area is arranged above the self-driving section 22 which has a smooth surface, the vehicle transmission device has little influence on scanned images of the vehicle and therefore high quality of scanned vehicle images is achieved.

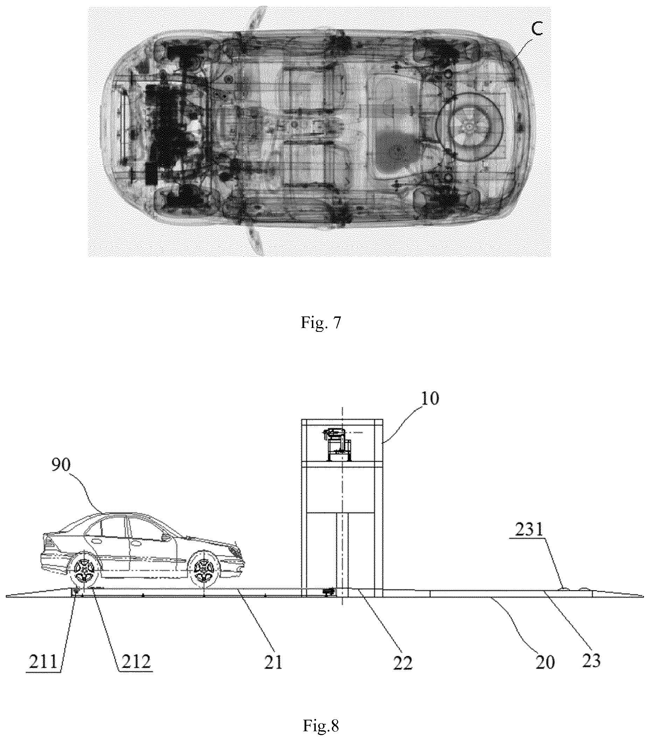

Fig. 7 is a scanned vehicle image generated by a vehicle inspection system of the present embodiment. As shown in Fig. 7, only image C of vehicles being inspected is displayed on scanned vehicle images of which the quality is not affected by the vehicle transmission device.

When the vehicle being inspected 90 is under inspection, a driver will drive the vehicle being inspected 90 to a designated position with the entire vehicle at the entrance of a scanning area, release the handbrake and engage the neutral gear, and the vehicle transmission device 20 will be started up after the driver and persons in the vehicle get off and leave. Then the initial driving section 21 will drag rear wheels of the vehicle being inspected 90 forward, and the vehicle being inspected 90 will accelerate to and move at a certain speed, such as 0.2m/s, until the front half of the vehicle being inspected 90 passes through the scanning area and is imaged. Driving will be terminated as soon as rear wheels of the vehicle being inspected 90 are pushed near the scanning area, meanwhile the vehicle being inspected 90 with an initial speed of 0.2m/s will go into the self-moving section 22 and slide. On the downward inclined self-moving section 22, the vehicle being inspected 90 will continue to move forward under the action of inertia and gravity, with the rear half passing through the scanning area and being imaged until the entire vehicle passes through the scanning area and a complete scanned vehicle image is formed. After that, the vehicle being inspected 90 will enter the deceleration section 23 and gradually slows down to a standstill.

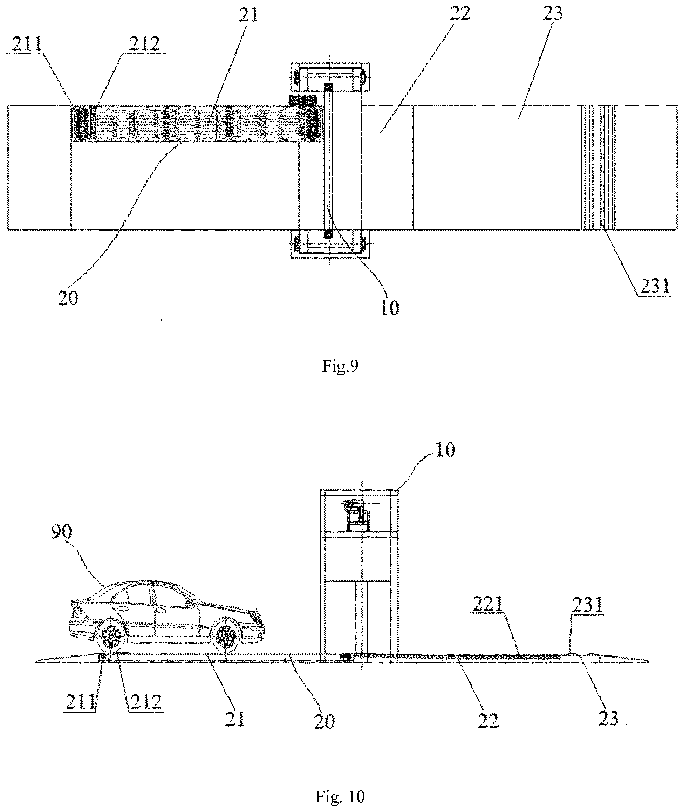

Fig. 8 and Fig. 9 show the structure of a vehicle inspection system in a second embodiment of the disclosure.

The second embodiment differs from the first embodiment in the structure of initial driving sections 21.

As shown in Fig. 8 and Fig. 9, the initial driving section 21 comprises a conveying surface carrying a vehicle being inspected 90, a pushing member 211 arranged on the conveying surface for pushing wheels, and a limiting member 212 arranged on the conveying surface and located downstream of the pushing member 211; when the initial driving section 21 drives the vehicle being inspected 90, the vehicle being inspected 90 is carried by the conveying surface, and a wheel of the vehicle being inspected 90 pushed by the pushing member 211 is limited between the pushing member 211 and the limiting member 212.

The limiting member is conductive to keeping the speed steady by preventing the vehicle being inspected 90 from uneven dragging speeds due to moving back and forth in the process of dragging, and a steady speed when the vehicle being inspected 90 is passing through the scanning area helps achieve clearer images. In addition, the limiting member may also work to prevent the vehicle being inspected from premature leaving the initial driving section 21 and moving on their own, when front wheels reach the downward inclined section, and may prevent from inducing that an initial speed cannot be controlled to be desired values by the initial driving section, so as to better control the quality of scanned vehicle images.

As shown in Fig. 9, in the present embodiment, the initial driving section 21 is a unilateral driving section that drives left wheels. In the present embodiment, a unilateral plate chain conveyor serves as the driving section 21, and a plate chain surface works as the conveying surface. The pushing member consists of a pusher arranged on the surface of the plate chain, while the limiting member 212 is a convex boss disposed on the surface of the plate chain. The limiting member is a convex boss on the conveying surface, is simple in structure when playing a good limiting role.

In the present application, left rear wheels are between the pusher and the convex boss when transporting the vehicle being inspected 90. With the continuous rotation of the plate chain of the plate chain conveyor, the convex boss automatically rotates down with the plate chain when the latter is rotated from top to bottom. In this way, restrictions on left rear wheels are lifted, which further lifts restrictions on the vehicle being inspected, and then the vehicle being inspected 90 moves along the self-moving section 22.

For those not described in the second embodiment, reference may be made to the relevant descriptions of the rest of the disclosure.

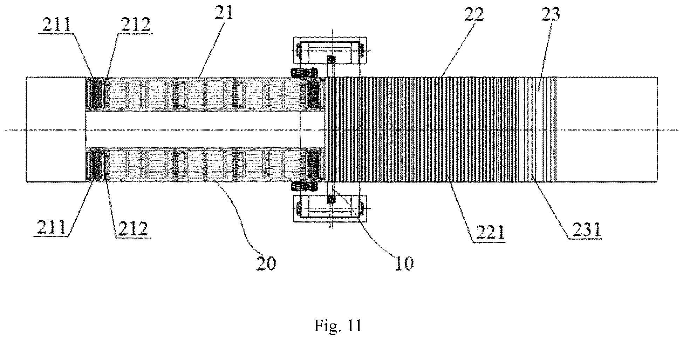

Fig. 10 and Fig. 11 show the member of a vehicle inspection system in a third embodiment of the disclosure.

The third embodiment differs from the second embodiment in the member of initial driving sections 21, as well as the member of self-moving sections 22.

As shown in Fig. 10 and Fig. 11, the initial driving section 21 of the third embodiment is different from the initial driving section 21 of the second embodiment in that the initial driving section 21 of the third embodiment is a bilateral driving section that simultaneously drives both left and right wheels of a vehicle being inspected 90.

In the present embodiment, the initial driving section 21 is a bilateral-driving plate chain conveyor, comprising two conveyor chains arranged side by side. At the same time, pushers and convex bosses are respectively arranged on two conveyor plate chains as the pushing member and the limiting member. When transporting the vehicle being inspected 90, wheels on both sides are respectively carried on the two conveyor plate chains, and each of left rear wheel and right rear wheel is located between the pusher and the convex boss of the corresponding conveyor plate chain. The initial driving section adopts the form of bilateral driving section, which achieves a more stable speed and a more accurate moving direction of the vehicle being inspected 90 and helps obtain clearer scanned vehicle images.

As shown in Fig. 10 and Fig. 11, the third embodiment differs from the second embodiment in that the self-moving section 22 of the third embodiment comprises a plurality of parallel transfer rollers 221 which are distributed at the top of the self-moving section 22 along the moving direction of the vehicle being inspected 90. With the transfer rollers 221 arranged on the top of the self-moving section 22, the vehicle being inspected 90 is capable of passing through the scanning area when the handbrake is on as the transfer rollers are rotating, which may prevent the vehicle being inspected 90 from an unsmooth movement on the self-moving section caused by a driver's pulling of handbrake out of habit before getting out, thus making it easier for the vehicle to be scanned.

As shown in Fig. 10, the plurality of transfer rollers 221 are arranged on the downward inclined section. Based on an initial speed, the transfer rolls 221 arranged on the downward inclined section are conductive to driving the vehicle being inspected 90 to move forward under the action of gravity, which is conducive to the smooth passage of the vehicle being inspected 90 through the scanning area.

For those not described in the third embodiment, reference may be made to the relevant descriptions of the rest of the disclosure.

The above embodiments shall not constitute a limitation on the disclosure. e.g.:
In some alternative embodiments, the upper surface of the downward inclined section arranged on the self-moving section may adopt other forms. For example, the upper surface of the downward inclined section may be arranged to be a convex surface or a concave surface relative to an imaginary plane that connects the first end and the second end of the downward inclined section, or the downward inclined section may comprises two or more downward inclined sub-sections separated by a horizontal section or two or more downward inclined sub-sections with different slopes.

In addition, the self-driving section may also adopt other forms, for example, a horizontal section is adopted, as long as an initial speed imposed by the initial driving section on vehicles being inspected and the parameters of the horizontal section working as the self-moving section can ensure the smooth passage of the vehicles being inspected through the scanning area.

The initial driving section may be in various forms, such as a belt conveyor or a chain roller conveyor.

In other embodiments not illustrated by drawings, the deceleration section may comprise an upward inclined section which inclines upward from the one end of near the self-moving section toward the another end away from the self-moving section, or comprises a friction section laid by granular materials such as sandy soil or soft materials such as rubber.

In addition, the deceleration section is not a must. For example, the vehicle being inspected may decelerate itself after leaving the vehicle transmission device by virtue of rolling friction, and in the case that a plurality of transfer rollers are provided on the self-moving section, a handbrake may be required to be pulled when the vehicle being inspected is passing through the scanning area, which enables the vehicle being inspected to stop on its own after passing the scanning area when the braking force of the handbrake is greater than the transferring capacity of the transfer rollers.

The disclosure and embodiments are particularly applicable to top-view imaging vehicle inspection systems for small vehicles, and may also be applied in medium or large vehicles, or vehicle inspection systems that adopt imaging modes other than top view imaging.

According to the above descriptions, in contrast to the two-section dragging devices applied in top-view imaging vehicle inspection systems for small vehicles, as in the prior art, only one driving section, namely the initial driving section, together with the self-moving section, is provided in each embodiment of the disclosure, which has the advantages of independence of scanned vehicle images from the vehicle transmission device, simple member, less power load of the entire system and less costly manufacturing, maintenance and operation. The control process is simpler because only one driving section needs to be controlled when controlling the vehicle transmission device; there is no need to monitor the arrival of front wheels of vehicles, and the quality of scanned vehicle images is not affected by the wheel size and wheel pitch length, which increases reliability in use and enhances the quality of scanned vehicle images.

Finally, it is noted that the above embodiments are only used to explain the technical solution of the disclosure and shall not be construed as limitation; Although the disclosure is described in detail with reference to preferred embodiments, those of ordinary skill in the art should understand: the specific embodiment of the disclosure may still be modified or some technical features may be replaced by equivalent without breaking away from the spirit of the technical solution of the disclosure, and all modified embodiments and replaced technical features shall be covered by technical solution of this disclosure patent.

## Claims

1. A vehicle inspection system, comprising:
a scanning device (10); and
a vehicle transmission device (20), extending through a scanning area of a scanning device (10), for driving a vehicle being inspected (90) through the scanning area;
wherein the vehicle transmission device (20) comprises:
an initial driving section (21), located upstream of the scanning area along a moving direction of the vehicle being inspected (90), for driving the vehicle being inspected (90) to move towards the scanning device (10) and enabling the vehicle being inspected (90) to have an initial speed upon termination of driving; and
a self-moving section (22), arranged downstream of the initial driving section (21), for allowing the vehicle being inspected (90) to move on by itself after termination of driving until the vehicle being inspected (90) entirely passes through the scanning area.

2. The vehicle inspection system according to claim 1, wherein the initial driving section (21) is configured to terminate driving when the vehicle being inspected (90) partially passes the scanning area.

3. The vehicle inspection system according to claim 1, wherein the initial driving section (21) is configured to drive the vehicle being inspected (90) by pushing front or rear wheels of the vehicle being inspected (90).

4. The vehicle inspection system according to claim 1, wherein the initial driving section (21) is a unilateral driving section for driving either left wheels or right wheels of the vehicle being inspected; or the initial driving section (21) is a bilateral driving section for driving both left wheels and right wheels of the vehicle being inspected.

5. The vehicle inspection system according to claim 1, wherein the initial driving section (21) comprises a conveying surface carrying the vehicle being inspected (90), a pushing member (211) arranged on the conveying surface for pushing wheels, and a limiting member (212) arranged on the conveying surface and located downstream of the pushing member (211); when the initial driving section (21) drives the vehicle being inspected (90), wheels on at least one side of the vehicle being inspected (90) are carried on the conveying surface, and at least one wheel of the vehicle being inspected (90) is limited between the pushing member (211) and the limiting member (212).

6. The vehicle inspection system according to claim 5, wherein the limiting member comprises a convex boss protruding from the conveying surface.

7. The vehicle inspection system according to claim 1, wherein the self-driving section (22) comprises a downward inclined section which inclines downward from one end near the initial driving section (21) toward another end away from the initial driving section (21).

8. The vehicle inspection system according to claim 7, wherein the one end of the downward inclined section near the initial driving section (21) is 15 cm to 25 cm higher than the another end away from the initial driving section (21).

9. The vehicle inspection system according to claim 7, wherein the downward inclined section is 1.4m-2.0m in length.

10. A vehicle inspection system according to any one of claims 1 to 9, wherein the upper surface of the self-moving section (22) comprises a smooth surface, and the scanning area is arranged above the self-moving section (22).

11. A vehicle inspection system according to any one of claims 1 to 9, wherein the self-moving section (22) comprises a plurality of parallel transfer rollers (221) which are distributed at the top of the self-moving section (22) along the moving direction of the vehicle being inspected (90).

12. A vehicle inspection system according to any one of claims 1 to 9, wherein the vehicle transmission device (20) also comprises a deceleration section (23) arranged downstream of the self-driving section (22) along the moving direction of the vehicle being inspected (90).

13. The vehicle inspection system according to claim 12, wherein the deceleration section (23) comprises a horizontal section and at least one deceleration strip (231) arranged on the horizontal section; or the deceleration section comprises an upward inclined section which inclines upward from one end near the self-moving section (22) toward another end away from the self-moving section (22); or the deceleration section comprises a friction section laid with granular materials or soft materials.
